# EUROPEAN PATENT APPLICATION

(11) **EP 4 421 979 A1**
(43) Date of publication of application: **28.08.2024**
(21) Application number: 24157896.2
(22) Date of filing: 15.02.2024
(51) Int. Cl.: H01Q 1/22, H01Q 11/04, H01Q 13/20

(54) **RFID FOLDABLE ANTENNA**

(30) Priority: 22.02.2023 US 202318172537
(71) Applicant: DJB Group LLC, Dublin, OH 43017 (US); Wistron NeWeb Corporation, Hsinchu Taiwan 308 (CN)
(72) Inventor: BURNSIDE, Walter D., deceased (US); BURNSIDE, Jeffrey J., Galloway, 43119 (US); BURKHOLDER, Robert J., Lake Charles, 70611 (US)
(74) Representative: Reddie & Grose LLP

(57) **Abstract**

An RFID antenna having two flexible elongated conductive transmission lines with coplanar RFID energy radiation perturbations distributed along the transmission lines, the transmission lines and perturbations being folded between ends of the transmission lines so that the transmission lines of one fold overlie and are adjacent the transmission lines of the other fold and an electrically insulating layer disposed between lengths of the transmission lines on either side of the fold.

## Description

The invention relates to RFID antennas.

U.S. Patent 8,058,998 discloses a high performance RFID antenna that has serpentine transmission or feed lines and dipoles or stubs forming perturbations spaced along the length of the transmission lines. The transmission lines and dipoles are encased between two foam boards to produce an assembly that is planar and relatively rigid. The patented antenna has the capability to provide item level service.

There are instances where an RFID antenna may be required, for space, protection and/or aesthetic reasons, to be incorporated into a cabinet, a portal such as a doorway, a wall or other space. In many of these instances a rigid, relatively long antenna cannot be readily accommodated. Thus, there is a need for an effective RFID antenna that can be adapted to the confines imposed by the environment in which the antenna is to be used.

It has been discovered that an antenna, such as disclosed in the aforementioned patent, which is folded, essentially on itself, or otherwise distorted from a single plane, if properly done, does not suffer a loss of performance and in some cases may obtain improved results. To accomplish this versatility, the antenna transmission lines and dipoles are preferably mounted on a flexible film and free of the confines imposed when attached to a rigid body. For greatest performance, the stubs or radiators of one folded layer should not overlap or cross stubs of another folded layer.

Folding, if done properly, can improve performance and will not degrade performance. For example, the fold is done to best ensure that all tags are read within and constrained to the desired read zone. Also this folding may have the potential to reduce the number of required antennas to read all tags, thus providing a more efficient solution.

The invention will now be further described by way of example with reference to the accompanying drawings, in which:
FIG. 1 is a schematic plan view of a nominal three foot antenna constructed in accordance with the invention;
FIG. 2 is a schematic plan view of a nominal five foot antenna constructed in accordance with the invention;
FIG. 3 is a schematic plan view of a nominal seven foot antenna constructed in accordance with the invention;
FIG. 4 is a cross-sectional view of the antennas shown in FIGS. 1-3; and
FIG. 5 is an example of a preferred way of folding an antenna such as the 7 foot antenna of FIG. 3.

An RFID antenna 10, has parallel feed lines or transmission lines 11, spaced by a small gap 12, arranged in a serpentine, curvilinear pattern symmetrical with an axis 13. The transmission lines 11 can be a thin foil of aluminum or other conductive metal. Dipoles or stubs 14 located where the transmission lines cross the axis 13 are electrically connected to a respective feed line 11 and can be of the same conductive material as the feed line. Preferably, the feed lines 11 and dipoles or radiators 14 are coplanar. As shown, the dipoles are perpendicular to the local orientation of their respective feed line and are preferably at an angle of +45 degrees or -45 degrees relative to the axis. Each of the feed lines 11 at one end are independently connected to either the inner conductor of a coaxial cable or the outer conductor. The antenna is characterized by diversity of both electric field polarization and beam direction with a relatively uniform signal strength emitted from each dipole radiator 14.

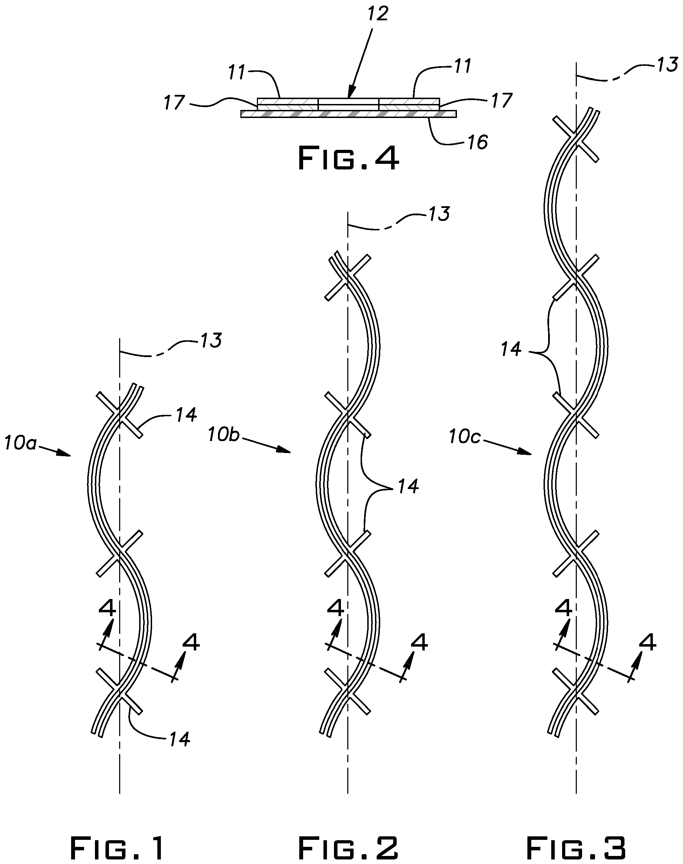

FIG. 4 illustrates a typical cross-section of the antennas of FIGS. 1-3. A flexible base 16 of, for example, Mylar^{®} in a thickness of 0.1 mm carries a thin foil of 0.1 mm aluminum that forms the feed lines 11 and dipoles 14. The aluminum foil is fixed to the Mylar^{®} base 16 by double-sided tape 17. The Mylar^{®} film or sheet 17 is resiliently flexible in its plane, as is the aluminum foil, forming the co-planar feed lines 11 and stubs 14, as well as the adhesive tape 17.

The antenna 10, supported on the layer of Mylar^{®} film can be folded on itself, front-to-front or back-to-back to form a sandwich of preferably not less than 1/2 inch thickness without damage to the Mylar^{®} film, transmission lines, stubs or tape. The radius of the fold should thus not be less than 1/4 inch. To prevent coupling between the feed lines 11 of the folded layers, a plastic foam layer of, for example, 0.5 inches thickness can be disposed between the layers.

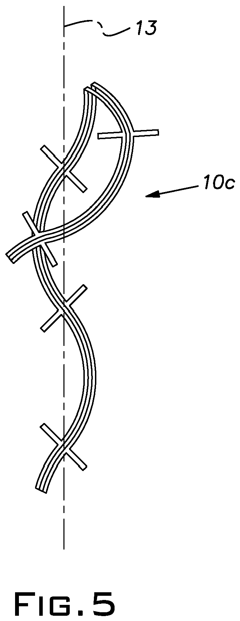

For proper antenna operation, the composite of the base Mylar^{®} and transmission lines should be folded in such a way that dipoles 14 or of one layer do not overlap the dipoles or perturbations of another layer. FIG. 5 shows this condition which improves radiation diversity.

The dipoles or stubs 14 as described above are directly connected to the feed lines 11. These stubs 14 represent perturbations to the feed lines 11 and radiate RFID energy. Equivalent perturbations, also co-planar with the feed lines 11, can be in the form of sharp changes in the path or shape of the planar feed lines such as notches cut into the feed lines, abrupt changes in the electrical properties of the feed lines (e.g. width and spacing of the coplanar feed lines). The radiating stubs 14 or their equivalents need not be in electrical contact with the feed line. Slot, loop or patch radiators may be used and they may be capacitively or inductively functionally coupled to each strip of the feed line. The perturbations or stubs 14 can be positioned about (i.e. ± 15%) a wavelength apart.

Embodiments of the invention can be described with reference to the following numbered clauses, with preferred features laid out in the dependent clauses:
1. An RFID antenna comprising a pair of elongated generally parallel spaced feed lines and radiation producing perturbations spaced along the feed lines, the feed lines and perturbations lying in a common plane, the feed lines comprising flat metal conductors, the feed lines being flexible and supported on a flexible layer of nonconductive material, whereby the feed lines are capable of being bent at a bend line without damage to the flexible layer out of a single plane such that resulting layers of the feed lines can be within a distance of less than 1-1/2 inch of each other adjacent the bend line.
2. An RFID antenna as set forth in clause 1, wherein the feed lines are in a serpentine pattern.
3. An RFID antenna as set forth in either clause 1 or clause 2, wherein the perturbations are stubs extending laterally away from the feed lines.
4. An RFID antenna as set forth in clause 3, wherein the stubs are joined to a respective feed line.
5. An RFID antenna as set forth in any preceding clause, wherein said flexible layer is a plastic film.
6. An RFID antenna as set forth in clause 5, wherein said plastic is Mylar^{®}.
7. An RFID antenna as set forth in clause 6, wherein said Mylar^{®} has a nominal thickness of 0.10 mm.
8. An RFID antenna as set forth in any preceding clause, wherein said metal conductors are aluminum of 0.1 mm thickness.
9. An RFID antenna having elongated parallel transmission lines and radiation emitting perturbations distributed along the transmission lines, the transmission lines and perturbations being coplanar and in a resiliently flexible state devoid of rigid support structures enabling the transmission lines and perturbations to be bent with a radius as small as 1/4 inch out of a plane without damage to conform to a rigid structure.
10. The RFID antenna of clause 9 being capable of being folded so that said transmission lines and perturbations are folded on themselves into a sandwich-like structure having a layer-to-layer dimension between lengths of the transmission line as small as 1/2 inch without damage.

## Claims

1. An RFID antenna having two flexible elongated conductive transmission lines with coplanar RFID energy radiation perturbations distributed along the transmission lines, the transmission lines and perturbations being folded between ends of the transmission lines so that the transmission lines of one fold overlie and are adjacent the transmission lines of the other fold and an electrically insulating layer disposed between lengths of the transmission lines on either side of the fold.

2. An antenna as set forth in claim 1, wherein the transmission lines are in a serpentine pattern.

3. An antenna as set forth in either claim 1 or claim 2, wherein the perturbations are arranged so that the perturbations of one fold do not overlie the perturbation of another fold.

4. An antenna as set forth in any preceding claim, wherein the perturbations are stubs extending from the transmission lines.
